# FASCICULE DE BREVET EUROPEEN

(11) **EP 1 912 408 B1**
(45) Date de publication et mention de la délivrance du brevet: **07.02.2018**
(21) Numéro de dépôt: 07118336.2
(22) Date de dépôt: 11.10.2007
(51) Int. Cl.: H04L 29/06

(54) **PROCÉDÉ DE GESTION D'UNE BASE DE DONNÉES PARTITIONNÉE DANS UN RÉSEAU DE COMMUNICATION**
VERWALTUNGSVERFAHREN EINER UNTERTEILTEN DATENBANK IN EINEM KOMMUNIKATIONSNETZ
METHOD OF MANAGING A DATABASE PARTITIONED IN A COMMUNICATION NETWORK

(30) Priorité: 12.10.2006 FR 0654211
(43) Date de publication de la demande: 16.04.2008
(73) Titulaire: Orange, 75015 Paris (FR)
(72) Inventeur: Le Merrer, Erwan, 22730 Tregastel (FR); Neveux, Didier, 22140 Cavan (FR); Crepieux, Pierre, 22300 Lannion (FR)

(56) Documents cités:
- EP-A- 1 615 403
- WO-A-98/17032
- WO-A1-02/073441

## Description

La présente invention se rapporte au domaine des réseaux de communication et notamment à la gestion de bases de données présentes dans ces réseaux. Plus particulièrement, l'invention permet d'améliorer la gestion de bases de données partitionnées en segments dans un réseau de pairs.

La gestion d'une base de données doit garantir, pour un utilisateur, une accessibilité permanente vers ces données. Cette permanence est assurée, notamment, par une copie de tout ou partie de la base de données sur plusieurs noeuds de ce réseau. Ainsi, même si un noeud se retire du réseau, aucune donnée n'est perdue.

L'une des techniques actuelles pour stocker des données dans un réseau de pairs, est l'utilisation de tables de hachage distribuées sur plusieurs noeuds. Chaque noeud recevant une table est responsable de cette table. Pour assurer un accès permanent aux données, les tables de hachage sont copiées sur d'autres noeuds. Cette technique est équivalente à celle enseignée par la demande internationale WO02073441 pour la division et le stockage redondant de fichiers sur plusieurs serveurs.

De part la distribution des tables de hachage, les noeuds recevant la copie d'une table, sont les noeuds les plus proches du noeud responsable de cette table. Or ces noeuds ne sont pas forcément les plus appropriés pour recevoir cette copie.

La demande de brevet européen EP 1 615 403 enseigne de sélectionner le noeud destiné à recevoir une copie en fonction des capacités des noeuds. Or, lorsque le noeud responsable de la table n'est plus disponible, ces noeuds ne sont pas faciles à retrouver et la recherche de données est entravée. Ceci ne permet pas une gestion efficace de la base de données.

La présente invention permet de palier ou pour le moins de réduire tout ou partie des inconvénients précités.

Un premier objet de la présente invention concerne un procédé de gestion d'une base de données dans un réseau de communication (40) comprenant une étape de copie d'au moins une partie d'un segment à copier de la base de données en un segment copié, ledit segment à copier étant stocké sur un noeud d'un sous-réseau dudit réseau de communication; une étape de sélection d'au moins un noeud appartenant au réseau de communication et destiné à recevoir le segment copié; le noeud étant sélectionné selon une information de capacité qui lui est propre parmi les noeuds d'un sous-réseau prédéterminé.

Des connexions relient les sous-réseaux entre eux.

Ceci permet de passer d'un sous-réseau à un autre pour rechercher une donnée au lieu de réaliser une exploration sur l'ensemble des noeuds du réseau de pairs. La recherche de données dans la base, partitionnées sur différents noeuds, en est facilitée.

Selon des modes de réalisation préférentiels non limitatifs, le premier objet de l'invention présente les caractéristiques supplémentaires prises isolément ou en combinaison, énoncées ci-après:
Lorsque le segment copié et le segment à copier sont identiques, le sous-réseau prédéterminé est le sous-réseau auquel appartient le noeud stockant le segment à copier. Ainsi, plusieurs noeuds stockent le même segment de la base de données. En cas de disparition d'un noeud, les données ne seront pas perdues. La communication entre les différents noeuds, appartenant à un même sous-réseau, en est améliorée.

Le noeud est sélectionné selon une capacité de stockage de données dudit noeud.

Ainsi, il est assuré que le noeud recevant le segment copié est capable de le stocker.

Le noeud est sélectionné selon une capacité mémoire dudit noeud.

Ainsi, il est assuré que le noeud recevant le segment copié est capable de répondre à des requêtes provenant d'autres noeuds ou d'un commanditaire externe au réseau.

Le noeud sélectionné appartient à un réseau de pairs.

Les investissements en matériels et les coûts d'exploitation associés vont être ainsi limités. En effet, le noeud est placé chez un client.

Un deuxième objet de l'invention concerne un équipement dans un réseau de communication comprenant des moyens de copie d'au moins une partie d'un segment à copier de la base de données en un segment copié, ledit segment à copier étant stocké sur un noeud d'un sous-réseau dudit réseau de communication; des moyens de sélection d'au moins un noeud appartenant au réseau de communication et destiné à recevoir le segment copié; les moyens de sélection étant aptes à sélectionner le noeud selon une information de capacité qui lui est propre parmi les noeuds d'un sous-réseau prédéterminé.

Un troisième objet de l'invention concerne un système de communication incluant une base de données constituée d'une pluralité de segments stockés sur une pluralité de noeuds appartenant à un réseau de communication, lesdits noeuds comprenant des équipements conformes à l'équipement ci-dessus.

Selon des modes de réalisation préférentiels non limitatifs, le système de communication objet de l'invention présente les caractéristiques supplémentaires prises isolément ou en combinaison, énoncées ci-après:
Des noeuds stockant des segments identiques de la base de données sont connectés entre eux pour former des sous-réseaux.

La communication entre les différents noeuds, appartenant à un même sous-réseau, en est améliorée. La volumétrie des données à stocker est en outre adaptée à la capacité de stockage des noeuds tout en facilitant la gestion des données dans la base.

Des connexions relient les sous-réseaux entre eux.

Ceci permet de passer d'un sous-réseau à un autre pour rechercher une donnée au lieu de réaliser une exploration sur l'ensemble des noeuds du réseau de pairs. La recherche de données dans la base, partitionnées sur différents noeuds, en est facilitée.

Un quatrième objet de l'invention concerne un programme d'ordinateur comprenant des portions de code pour l'exécution des étapes d'un procédé tel que décrit plus haut lorsque le programme est exécuté sur ledit ordinateur.

Un cinquième objet de l'invention concerne une mise à disposition d'un programme d'ordinateur tel que décrit plus haut en vue de son téléchargement.

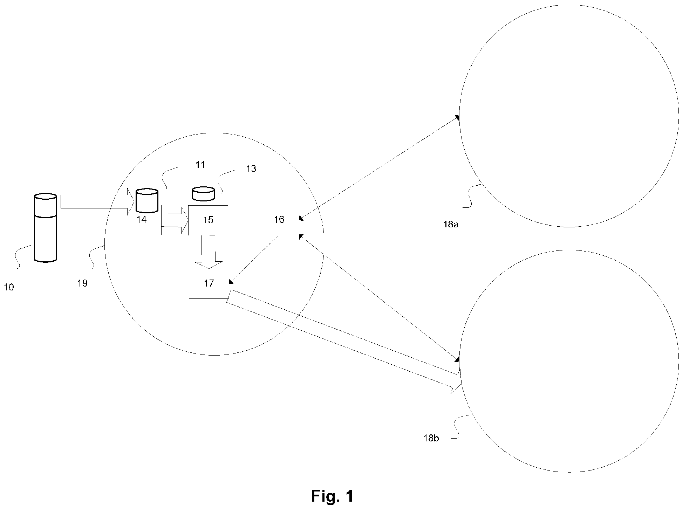

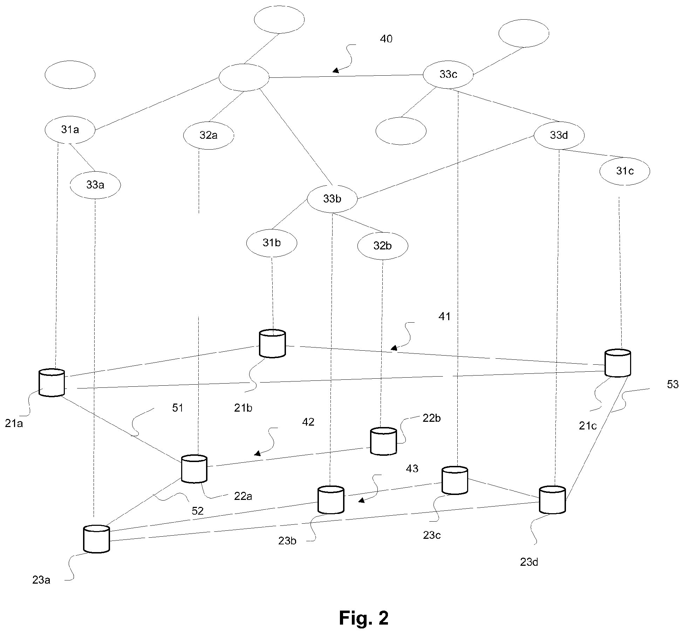

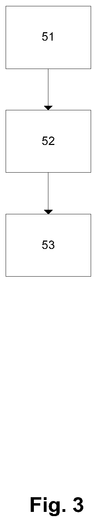

L'invention sera mieux comprise et d'autres particularités et avantages apparaîtront à la lecture de la description, faite à titre d'exemple, cette description faisant références aux dessins annexés représentant:
- A la Fig.1, un noeud d'un réseau de communication selon l'invention;
- A la Fig.2, un système de communication selon l'invention;
- A la Fig.3, une procédé de gestion d'une base de données selon l'invention.

L'invention est décrite ci-après dans une application particulière à un réseau de pairs. Cependant, cette invention s'applique également à tout réseau de communication dans lequel est présente une base de données partitionnée.

La Fig.1 présente un noeud 19 appartenant à un réseau de communication. Ce noeud est, par exemple, un ordinateur. En variante, le noeud est un téléphone fixe ou mobile, ou tout autre terminal de communication.

Le noeud 19 comporte un équipement comportant des moyens de stockage 14 d'un segment à copier 11 d'une base de données 10 partitionnée. Il comporte également des moyens de copie 15 d'au moins une partie du segment à copier 11 en un segment copié 13. Dans un mode de réalisation, le segment à copier 11 et le segment copié 13 sont différents. En variante, le segment à copier 11 et le segment copié 13 sont identiques, c'est notamment le cas lorsqu'il est souhaité qu'une réplication du segment à copier 11 de la base de données 10 soit réalisée sur d'autres noeuds 18a, 18b. Le noeud 19 est connecté ici, de manière non limitative, avec plusieurs autres noeuds 18a, 18b appartenant au réseau de communication. Des moyens de sélection 16 envoient des messages d'interrogation vers les autres noeuds 18a, 18b. Ceux-ci en réponse envoient une information sur leur capacité. Cette information est, par exemple, la capacité de stockage du noeud. En variante, cette information est la capacité mémoire du noeud ou la puissance du processeur. Dans une autre variante, cette information est la capacité de la bande passante exploitée par le noeud. Dans une autre variante, l'information comprend l'ensemble de ces capacités. Dans une autre variante, l'information retournée peut consister en un OK ou non OK. A partir des informations provenant des différents noeuds 18a, 18b, les moyens de sélection 16 vont sélectionner le ou les noeuds les plus appropriés pour recevoir le segment copié 13 de la base de données. Les moyens de transmission 17 font parvenir alors le segment copié 13 à au moins un noeud 18a, 18b sélectionné pour sa capacité. Ainsi le noeud ayant une très grande capacité, est sélectionné en priorité pour être associé avec le segment copié. La gestion de la base de données en est alors optimisée.

On notera en variante, qu'un noeud est capable de stocker des segments de base différents.

Une fois qu'au moins un noeud 18a, 18b a reçu le segment copié 13, ce segment est, par exemple, supprimé des moyens de stockage 14 du noeud 19. Le segment à copier 11 est alors remplacé par une nouveau segment à copier 11 sans le segment 13 qui a été copié. En variante, le segment à copier 11 reste entièrement stocké dans les moyens 14.

La base de données 10 collecte et traite des informations, par exemple, à des fins d'analyses statistiques. En variante, la base de données sert à stocker des contenus tels que le profil d'un client, des messages conversationnels, des films ou autres.

La Fig.2 présente un système de communication incluant une base de données 10 constituée d'une pluralité de noeuds. La base de données est ici partitionnée en segments 21a, 22a, 23a, disposées sur des noeuds 31a, 32a, 33a formant un réseau de pairs 40.

Un réseau de pairs est un réseau dans lequel chaque noeud joue à la fois le rôle de serveur et de client ne nécessitant pas l'utilisation d'un serveur centralisé dédié pour effectuer les tâches que le noeud doit acquitter.

Ces noeuds sont connectés, c'est-à-dire qu'ils échangent des informations entre eux, par exemple sur l'état du réseau. En effet, un réseau de pairs est par nature dynamique. Les noeuds se connectent et se déconnectent fréquemment de ce réseau, et ceci indépendamment les uns des autres. Il est alors nécessaire que les noeuds, formant le réseau, s'informent mutuellement de ces changements.

Les topologies d'un réseau de pairs sont variables. La Fig. 2 présente une topologie dans laquelle les noeuds sont dans un même niveau hiérarchique. En variante, la topologie du réseau est de type hybride. Dans cette topologie, des supers pairs, élus parmi les noeuds, jouent le rôle de serveurs vis-à-vis des autres noeuds.

La base de données 10 est ici partitionnée, de manière non limitative, en trois segments 21a, 22a, 23a.

Par un segment de la base de données, il est entendu un morceau de la base tel que l'association de l'ensemble des segments permet de reconstituer la base de données 10 en entier. Les segments sont de même taille. En variante les segments sont de taille différente.

Chaque segment est associé à un noeud 31a, 32a, 33a, du réseau. Par exemple, le segment 21a est associé avec le noeud 31a et les segments 22a, 23a sont associés respectivement avec les noeuds 32a et 32b. Par associé, on entend que les segments de la base de données 10 sont stockés dans des moyens de stockage 14 appartenant aux noeuds. Ces moyens de stockage 14 peuvent être, par exemple, le disque dur d'un ordinateur. On ne stocke ainsi sur un noeud qu'un morceau 10 de la base de données. Ceci permet de minimiser le travail effectué par chacun des noeuds. Ce travail consiste en des opérations de stockage et/ou en des opérations de traitement de requêtes. Ces requêtes émanent d'autres noeuds. En variante, ces requêtes émanent d'un commanditaire externe au réseau.

Afin d'initialiser la mise en place de la base de données dans le réseau de pairs, un moyen de partition externe au réseau de pairs partitionne la base de données 10 en plusieurs segments 21a, 22a, 23a. Ces segments sont ensuite associés avec les noeuds 31a, 32a, 33a.

Dans une variante de réalisation, la mise en place de la base de données dans le réseau se fait par l'intermédiaire d'un seul noeud recevant l'ensemble des segments constituant la base de données 10. Le noeud est par exemple choisi pour ses capacités et/ou les caractéristiques de sa connexion au réseau.

Un segment stocké sur un noeud est à copier pour différentes raisons.

Par exemple, un segment à copier 21a est à copier pour constituer les segments 22a, 23a. Les segments 21a, 22a, 23a constituent alors des segments distincts de la base de données 10. L'évolutivité de la base de données, liée à la croissance et à la décroissance de cette base, est alors assurée.

Dans une autre utilisation, un segment à copier 21a, 22a, 23a est à copier pour constituer les segments 21b, 21c copies identiques du segment 21a, les segments 22b, 22c copies identiques du segment 22a, les segments 23b, 23c copies identiques du segment 23a. Ces copies identiques permettent d'assurer la permanence des données. La permanence des données est une problématique liée à la dynamique du réseau de pairs. En effet, des données peuvent être perdues lors de la déconnexion d'un noeud stockant un segment de la base de données 10. Cette permanence est alors assurée par la copie du segment à copier sur un ou plusieurs autres noeuds.

La Fig.3, présente un procédé de gestion d'une base de données dans un réseau de communication permettant la copie d'un segment à copier.

Les segments copiés sont, par exemple, différents du segment à copier. Le procédé comporte ainsi une étape de copie 51 du segment à copier 21a en une ou plusieurs segments copiés 22a, 23a. Une étape de sélection 52 permet de choisir au moins un noeud 32a, 33a capable de recevoir le ou les segments copiés 22a, 23a. Une étape de transmission 53 permet d'envoyer le ou les segments copiés 22a, 23a vers le ou les noeuds 32a, 33a sélectionné.

Les segments copiés sont, dans un autre exemple, identiques et forment une ou plusieurs copies du segment à copier. Le procédé comporte ainsi une étape de copie 51 du segment à copier 21a, 22a, 23a en une ou plusieurs segments copiés 21b, 21c, 22b, 23b, 23c, 23d. Une étape de sélection 52 permet de choisir au moins un noeud 31b, 31c, 32b, 33b, 33c, 33d capable de recevoir la ou les segments copiés 21b, 21c, 22b, 23b, 23c, 23d. Une étape de transmission 53 permet d'envoyer le ou les segments copiés 21b, 21c, 22b, 23b, 23c, 23d vers le ou les noeuds 31b, 31c, 32b, 33b, 33c, 33d sélectionnés.

Les pairs stockant les segments identiques 21a, 21b, 21c, ainsi que 22a, 22b, et 23a, 23b, 23c, 23d sont connectés entre eux pour former des sous-réseaux ou couches autonomes 41, 42, 43 au sein du réseau de pairs 40. Ces couches constituent ainsi un nouveau niveau d'interconnexion entre les noeuds du réseau de communication. Les noeuds appartenant aux sous-réseaux sont par exemple reliés sur un mode décentralisé de type pairs à pairs.

Le nombre de sous-réseaux nécessaire est modulé en fonction de la capacité de stockage des noeuds et de la masse d'information à stocker. Ainsi, une base de données trop grande pour pouvoir être hébergée entièrement par un sous-réseau, sera découpée en plusieurs segments. Chaque segment est stocké par une couche autonome.

Le procédé de gestion de la base de donnée dans le réseau de communication est, par exemple, mis en oeuvre par un programme d'ordinateur. Ce programme est chargeable dans la mémoire interne d'un ordinateur. Il comprend notamment des portions de code pour l'exécution des étapes dudit procédé de gestion lorsqu'il est exécuté sur l'ordinateur.

L'invention concerne également une offre de téléchargement d'un programme d'ordinateur, à partir d'un exemplaire dudit programme stocké sur un support d'enregistrement.

Le réseau de pairs est, ainsi, utilisé pour des services classiques, comme par exemple l'accès au réseau ou le routage. Les sous-réseaux ou couches autonomes sont, eux, utilisés pour garantir la permanence des données dans le réseau et faciliter les communications entre les noeuds d'un même sous-réseau.

On notera qu'en variante, les sous-réseaux peuvent contenir des noeuds ayant des segments de base différents. Un noeud peut donc faire partie de plusieurs sous-réseaux.

Au sein d'un sous-réseau, le nombre de copies ne doit pas tomber en dessous d'un certain seuil mini, au risque de perdre les données stockées. Le nombre de copies ne doit pas dépasser également un certain seuil maxi, au risque de rendre plus difficile la cohérence et la gestion des copies. Ces seuils sont définis en fonction de la dynamique du réseau. Une fois les seuils déterminés, il faut maintenir le nombre de copies nécessaires.

Un premier mécanisme, pour maintenir ce nombre, se fonde sur une méthode dite locale. Dans cette méthode, chaque voisin d'une copie disparue recherche, avec une probabilité de 1/N, un noeud dans le réseau 40 pour remplacer ce noeud disparu. N correspond au nombre moyen de voisins pour chaque copie dans une couche donnée. Ce nombre est prédéfini par exemple par le gestionnaire du réseau 40.

A ce premier mécanisme il est possible d'associer une deuxième méthode dit globale. Cette deuxième méthode nécessite que les noeuds connaissent le nombre total T de copies dans une couche à laquelle ils sont associés. Pour connaître ce nombre T, il est possible d'utiliser des méthodes telles que les marches aléatoires, l'agrégation ou le probalistic polling. La fréquence moyenne de contrôle dépend de la dynamique du réseau, c'est-à-dire de la fréquence de disparition des noeuds. Lorsqu'un noeud détecte que le nombre de copies, dans une couche donnée, est inférieur à un seuil mini prédéfini, il va, alors, piloter la création d'une ou plusieurs copies selon le procédé de la Fig.3.

Dans une variante, dite semi-globale, un système d'élection permet de choisir le ou les noeuds qui vont prendre en charge la création des copies. Cette élection est réalisée, par exemple, via une information diffusée en broadcast dans la couche où il est nécessaire de remplacer les copies perdues.

Lorsqu'un pair est sélectionné pour recevoir un segment copié, il lui faut s'intégrer dans le sous-réseau 41, 42, 43 de noeuds stockant ledit segment. L'adresse de ce nouveau noeud est, par exemple, diffusé aux autres noeuds de ce sous-réseau. Ces autres noeuds vont lui proposer alors une interconnexion selon l'une des méthodes classiques des réseaux de pairs. En variante, lorsque qu'un noeud est sélectionné pour recevoir un segment de base déterminé, une liste de pairs stockant la même sous partie lui est communiquée. Cette liste est fournie par le noeud qui a effectué la sélection. En variante, la liste est fournie par un super pair ou tout autre noeud du réseau. C'est dans ce cas au noeud sélectionné d'établir des connexions avec les noeuds déjà existants au sein du sous-réseau 41, 42, 43 choisi.

Le nouveau noeud recruté obtient une copie du segment à copier selon le procédé de la Fig.3. Il l'obtient à partir du noeud qui l'a recruté. En variante, il l'obtient à partir d'un noeud quelconque ayant le segment à copier. C'est, par exemple, le noeud le plus disponible ou le plus proche. Dans une autre variante, il l'obtient par "hoarding" c'est à dire à partir de plusieurs noeuds. Ceci minimise la charge locale de chaque noeud.

On notera que la phase d'intégration du noeud dans le sous-réseau et la phase de copie du segment sont, en variante, inversées chronologiquement.

On notera également qu'il est possible d'avoir un délai entre la phase de détection de déconnexion d'un noeud et la sélection d'un ou plusieurs noeuds pour remplacer ce noeud. Il sera possible ainsi de tenir compte des déconnexions brèves d'un noeud du réseau.

Les contenus des différentes copies doivent être identiques. La garantie de cette cohérence est indispensable à chaque modification d'une copie, c'est-à-dire à la création, à la suppression ou à la modification des données dans la base. La modification des données est par exemple effectuée par une requête d'un commanditaire. En effet, les données évoluent dans le temps, il faut donc que les données dans les différentes copies évoluent simultanément. Un premier mode de réalisation consiste en ce que chaque requête modificative des données est envoyée en multicast à tous les copies. Un seul acquittement positif, parmi les multiples réponses des divers noeuds stockant la copie, suffira pour valider la modification. Dans un autre mode de réalisation, chaque requête est envoyée à un noeud déterminé. Une fois la modification effectuée dans le segment qu'il stocke, cette modification est diffusée vers les autres noeuds constituant le sous-réseau pour le segment de base déterminée. Cette diffusion est en mode multicast. En variante, la diffusion est de proche en proche. La modification n'est validée auprès du commanditaire que lorsque celle-ci est effective dans toutes les copies du sous-réseau. En variante, la modification est validée lorsqu'elle est effective dans une partie des copies du sous-réseau.

De plus, en dehors des phases de modifications, un contrôle régulier de la cohérence est, de manière préférentielle, mis en place. Ainsi, les noeuds stockant un même segment de base comparent, leurs contenus. Pour optimiser cette comparaison, les noeuds s'échangent les hash des copies. Un hash est une empreinte, obtenue en appliquant à un ensemble de données une fonction de hachage. Les propriétés des fonctions de hachage garantissent que si deux hash sont identiques, alors les contenus initiaux ne peuvent être qu'identiques. Inversement, si les hash sont différents, alors les données à partir desquelles ils sont calculés sont différentes. Ainsi, si le hash, provenant d'un premier noeud, reçu par un second noeud est identique au hash de la copie du second noeud, alors il y a cohérence des contenus des deux noeuds. A l'inverse, un hash différent signifie une différence entre les deux copies. Dans ce cas, les deux noeuds communiquent pour trouver les données sources de l'incohérence. Ces noeuds se synchronisent alors sur les données les plus récemment modifiées. A cette fin, les données modifiées sont datées. Les noeuds s'échangent ainsi les données les plus récemment modifiées. C'est en effet parmi elles que se trouve, avec une grande probabilité, l'incohérence.

En variante, les noeuds s'échangent des hash de données de plus en plus petits afin d'affiner la localisation de la donnée incohérente.

Dans certaines situations, une même donnée de la base est modifiée simultanément par deux commanditaires différents. Dans ce cas, il est nécessaire d'insérer un paramètre supplémentaire, comme l'adresse IP du commanditaire de la modification. La modification provenant du commanditaire ayant l'adresse la plus haute est, par exemple, prioritaire sur l'autre modification.

En cas de connexion ou de reconnexion d'un noeud, une mise en cohérence est également exécutée par le nouvel entrant, afin de tenir compte des évolutions durant sa période de non connexion.

Les noeuds appartenant à une sous-couche particulière sont ainsi synchronisés entre eux.

On notera que l'évolutivité de la base de données, est liée par exemple au nombre de clients ou au service de télécommunication utilisant cette base.

Le système de communication incluant la base de données repose ainsi sur des noeuds stockant des segments de la base de données connectés entre eux pour former des sous-réseaux. Ces connexions permettent d'adapter la volumétrie des données à stocker à la capacité de stockage des noeuds.

Dans un mode de réalisation, la capacité de stockage de chaque noeud du sous-réseau est fixée comme identique. Cette capacité est fixée, par exemple, par un gestionnaire du réseau. Dans ce cas, le recrutement d'un noeud sera soumis à l'obligation pour celui-ci de pouvoir assurer cette capacité de stockage. En variante, la capacité de stockage de chaque noeud est déterminée dynamiquement comme la capacité minimale du noeud du sous-réseau le moins performant. Ainsi, chaque noeud diffuse, la capacité maximale de stockage qu'il met à la disposition du sous-réseau. Chaque noeud retient alors la plus faible capacité entre les noeuds du sous-réseau. On notera que la diffusion est en en mode multicast ou de proche en proche. En variante, chaque noeud est libre de la capacité de stockage qu'il met à la disposition du sous-réseau.

Lorsqu'un sous-réseau atteint une saturation de stockage, il est alors nécessaire de créer un nouveau sous-réseau. La saturation de stockage est dépendante du nombre maximal de noeud dans un sous-réseau et du seuil de remplissage de stockage. Ce seuil est par exemple de 90%. Ce seuil permet d'accepter l'ajout de données dans le sous-réseau durant la phase de création d'un nouveau sous-réseau. Si une saturation de 100% est atteinte, tout nouvel ajout de données est bloqué.

A la saturation de stockage, chaque noeud du sous-réseau saturé élit un nouveau noeud à positionner dans un nouveau sous-réseau. Les noeuds du sous-réseau saturé s'échangent ensuite les adresses des nouveaux noeuds. Ces adresses sont ensuite fournies à chaque nouveau noeud. Ces nouveaux noeuds constituent alors en entre eux des connexions pour structurer le nouveau sous-réseau. Des liens entre les sous-réseaux sont également créés pour assurer les communications entre les sous-réseaux. Dans ce mode de réalisation, il est nécessaire que tous les noeuds du sous-réseau saturé aient l'information de saturation.

Dans une variante de réalisation, un noeud du sous-réseau saturé élit un nouveau noeud à installer dans le nouveau sous-réseau à créer. Ce nouveau noeud recevra en copie au moins une partie de segment de la base stockée dans le noeud saturé selon le procédé de la Fig.3. Ce nouveau noeud a alors la charge d'élire d'autres noeuds pour constituer le nouveau sous-réseau. Dans ce cas, on utilisera également le procédé de la Fig.3 pour créer des copies. Le noeud du plan saturé et le nouveau noeud échangent des adresses destinées à créer les liens 51, 52, 53 entre les sous-réseaux. Les noeuds du sous-réseau saturé sont également informés de la création d'un sous-réseau. Si tous les noeuds ont la même capacité de stockage, c'est le noeud ayant originellement reçu la requête pour l'entrée de nouvelles données qui va prendre en charge le lancement du processus de création d'un nouveau sous-réseau. Si les noeuds du plan ont des capacités de stockage différentes, c'est le noeud saturé qui doit lancer le processus.

Par cette gestion de la saturation il est permis de limiter le volume de données stocké sur chaque noeud du réseau.

Dans une base non ordonnée, lorsqu'une requête, pour l'entrée de nouvelles données, est adressée à un sous-réseau saturé, cette dernière est acheminée jusqu'au sous-réseau disposant de la ressource nécessaire au stockage. Si aucun sous-réseau n'a d'espace disponible, le dernier sous-réseau créé déclenche la création d'un nouveau sous-réseau. Un tel mécanisme empêche la création anarchique de sous-réseaux et en optimise l'utilisation.

Dans une base ordonnée, ce n'est pas le dernier sous-réseau qui déclenche la création d'un nouveau sous-réseau mais directement le sous-réseau saturé. Ceci permet de maintenir un ordre entre les sous-réseaux pour que les données soient toujours ordonnées dans la base.

Il existe également des requêtes pour la suppression de données dans la base. Dans le cas d'une base non ordonnée, cette requête est propagée à travers tous les sous-réseaux pour atteindre le sous-réseau hébergeant ces données. Afin de diminuer le temps d'exécution de la requête, celle-ci est propagée en parallèle au sein des sous-réseaux selon plusieurs chemins.

Afin d'optimiser la gestion des sous-réseaux, il est prévu un seuil de remplissage minimum et un seuil de remplissage imposé avant la suppression du sous-réseau. Le seuil de remplissage minimum permet de détruire le sous-réseau stockant peu de données. Ces données sont alors réattribuées à un autre sous-réseau. Le seuil de remplissage imposé avant éligibilité vise à palier les cycles incessants de création et de suppression d'un nouveau sous-réseau qui n'a pas atteint le seuil de remplissage minimum. Ceci permet de définir un cycle d'hystérésis dans la gestion des modifications du sous-réseau.

Une fois que la décision de détruire un sous-réseau est prise, ce dernier sollicite les sous-réseaux avec lesquels il est en connexion. Il transmet alors les données à l'un d'entre eux. Différents cas se produisent. Soit un sous-réseau est capable de recevoir les données du sous-réseau à détruire, auquel cas le transfert s'effectue. Ce transfert concerne non seulement les données mais également les connexions 51, 52, 53 entre les sous-réseaux. Soit aucun sous-réseau n'est en mesure d'héberger les données. D'autres sous-réseaux sont alors sollicités pour recevoir les données. En variante, le sous-réseau n'est pas détruit. Il pourra cependant l'être en fonction des prochaines requêtes de suppression.

Dans une base ordonnée, ce sont les sous-réseaux les plus proches du sous-réseau à détruire qui sont sollicités pour recevoir les données du sous-réseau à détruire.

Outre la permanence, la cohérence et l'évolutivité, la base de données partitionnée doit permettre un accès rapide aux données. Cet accès doit être en effet compatible avec les temps de réponse qu'impose le rendu des services de télécommunication.

La recherche de données dans une base de données nécessite la connaissance du sous-réseau contenant l'information recherchée. Cette recherche doit être la plus rapide possible. La rapidité d'une recherche est déterminée par le nombre de bonds nécessaires entre les noeuds pour accéder aux données recherchées. Pour cela, au moins un noeud de chaque sous-réseau à la connaissance d'au moins deux adresses de noeuds appartenant à deux sous-réseaux différents. Ces sous-réseaux sont appelés, par exemple, sous-réseau supérieur 41 et sous-réseau inférieur 43 par rapport à un sous-réseau 42 donné. Ainsi, il est possible de faire suivre des requêtes simplement d'un sous-réseau à un autre. Une grille à 1-dimension est donc créée entre les sous-réseaux. Dans une telle structure, les performances de routage sont de l'ordre de O(n), n étant le nombre de sous-réseaux. Pour améliorer ces performances, il est possible d'ajouter des liens supplémentaires 53 vers d'autres sous-réseaux. Ainsi, en ajoutant de l'ordre de O(log n) connexions à chaque noeud, il est démontré que le routage s'effectue en O(log n). Les noeuds, des autres sous-réseaux, recevant ces connexions supplémentaires sont choisis selon une distribution probabiliste donnée.

Les requêtes de recherche sont envoyées indifféremment à l'un quelconque des sous-réseaux. En effet, le sous-réseau est vu de l'extérieur comme un segment de la base de données. La structuration interne de la base de données n'est pas connue et il n'est donc pas possible d'envoyer directement une requête à un plan contenant les données recherchées.

Pour améliorer le routage de la requête, les données sont ordonnées entre les différents sous-réseaux pour former une base de données ordonnée. Ainsi, quand une requête parvient à un sous-réseau, ce dernier est capable de réacheminer cette requête vers le bon sous-réseau. Par exemple, si un sous-réseau responsable de l'hébergement des données commençant par un G reçoit une requête pour un mot commençant par la lettre M, la redirection n'aura lieu que dans un seul sens.

Ce mode de fonctionnement est bénéfique pour l'économie de bande passante et la charge des CPUs des divers noeuds traversés par la requête. En effet, le nombre de requêtes redirigées est ainsi limité. Ce mode de fonctionnement impose cependant que les sous-réseaux soient indexés. Cet index est, par exemple, la première valeur stockée par les noeuds du sous-réseau concerné.

Dans une base non ordonnée, les données ne sont pas ordonnées entre les sous-réseaux. Dans ce cas, lorsque la requête parvient à un sous-réseau 42 et que l'information n'y est pas trouvée, cette requête est propagée vers les sous-réseaux supérieurs 41 et inférieurs 43. Cette retransmission bidirectionnelle est nécessaire, ici, car il n'y a pas de notion d'ordre dans le classement des données. Il est donc important de visiter potentiellement tous les sous-réseaux de données. La propagation des requêtes s'arrête naturellement lorsque le sous-réseau le plus haut ou le plus bas est atteint. De plus, la propagation des requêtes vers les sous-réseaux supérieurs ou inférieurs, va permettre une parallélisation des requêtes. Plusieurs requêtes, portant sur la même information, sont donc simultanément actives à travers les sous-réseaux des données. La probabilité de tomber plus rapidement sur un sous-réseau hôte de la donnée cible est augmentée. Ce mode de réalisation évite l'opération d'indexation des sous-réseaux.

On notera que lorsque l'information est trouvée au sein de la base, le commanditaire à l'origine de la requête en est informé.

La base de données organisée en sous-réseaux permet de limiter les temps d'accès. Ceci améliore également la gestion de données critiques et leur pérennité dans un réseau dynamique. Ces caractéristiques sont compatibles avec les exigences traditionnelles de performances des opérateurs réseaux et des fournisseurs de services de télécommunications. La partition de la base de données sur plusieurs noeuds permet de limiter les investissements en matériels et les coûts d'exploitation associés. En effet, la base est conçue pour être présente sur des terminaux modestes. Ces terminaux sont, par exemple, chez les clients. En outre, l'utilisation de serveurs centralisés pour gérer la base de données n'est pas nécessaire.

## Revendications

1. Procédé de gestion d'une base de données (10) dans un réseau de communication (40) comprenant les étapes suivantes :
- copie (51) d'au moins une partie d'un segment à copier (11) de la base de données en un segment copié (13);
- sélection (52) d'au moins un noeud (18a, 18b) appartenant au réseau de communication (40) et destiné à recevoir le segment copié (13);
**caractérisé en ce que**, ledit segment à copier étant stocké sur un noeud d'un sous-réseau dudit réseau de communication, le noeud (18a, 18b) est sélectionné selon une information de capacité qui lui est propre parmi les noeuds d'un sous-réseau prédéterminé.

2. Procédé de gestion selon la revendication précédente **caractérisé en ce que**, lorsque le segment copié (13) et le segment à copier (11) sont identiques, le sous-réseau prédéterminé est le sous-réseau auquel appartient le noeud stockant le segment à copier.

3. Procédé de gestion selon l'une quelconque des revendications précédentes, **caractérisé en ce que** le noeud (18a, 18b) est sélectionné selon une capacité de stockage de données dudit noeud (18a, 18b).

4. Procédé de gestion selon l'une quelconque des revendications précédentes, **caractérisé en ce que** le noeud (18a, 18b) est sélectionné selon une capacité mémoire dudit noeud (18a, 18b).

5. Procédé de gestion selon l'une quelconque des revendications précédentes, **caractérisé en ce que** le noeud (18a, 18b) sélectionné appartient à un réseau de pairs.

6. Equipement dans un réseau de communication (40) comprenant :
- des moyens de copie (15) d'au moins une partie d'un segment à copier (11) de la base de données en un segment copié (13);
- des moyens de sélection (16) d'au moins un noeud (18a, 18b) appartenant au réseau de communication (40) et destiné à recevoir le segment copié (13);
**caractérisé en ce que**, ledit segment à copier étant stocké sur un noeud d'un sous-réseau dudit réseau de communication, les moyens de sélection (16) sont aptes à sélectionner le noeud (18a, 18b) selon une information de capacité qui lui est propre, parmi les noeuds d'un sous-réseau prédéterminé.

7. Système de communication incluant une base de données constituée d'une pluralité de segments stockés sur une pluralité de noeuds appartenant à un réseau de communication (40), **caractérisé en ce que** lesdits noeuds comprennent des équipements conformes à la revendication 6.

8. Système de communication selon la revendication précédente **caractérisé en ce que** des noeuds stockant des segments identiques (11, 13) de la base de données sont connectés entre eux pour former des sous-réseaux (41, 42, 43).

9. Système de communication selon l'une quelconque des revendications 7 à 8 **caractérisé en ce que** des connexions (51, 52, 53) relient les sous-réseaux (41, 42, 43) entre eux.

10. Programme d'ordinateur comprenant des portions de code pour l'exécution des étapes du procédé selon l'une quelconque des revendications 1 à 5 lorsque le programme est exécuté sur ledit ordinateur.

11. Mise à disposition d'un programme d'ordinateur selon la revendication précédente en vue de son téléchargement.

## Patentansprüche

1. Verfahren zur Verwaltung einer Datenbank (10) in einem Kommunikationsnetz (40), umfassend die folgenden Schritte:
- Kopie (51) mindestens eines Teils eines zu kopierenden Segments (11) der Datenbank in ein kopiertes Segment (13);
- Auswahl (52) mindestens eines Knotens (18a, 18b), der dem Kommunikationsnetz (40) angehört und dazu bestimmt ist, das kopierte Segment (13) zu empfangen;
**dadurch gekennzeichnet, dass**, wobei das zu kopierende Segment auf einem Knoten eines Unternetzes des Kommunikationsnetzes speichert ist, der Knoten (18a, 81b) nach einer Kapazitätsinformation, die ihm unter den Knoten eines vorbestimmten Unternetzes eigen ist, ausgewählt wird.

2. Verwaltungsverfahren nach dem vorhergehenden Anspruch, **dadurch gekennzeichnet, dass**, wenn das kopierte Segment (13) und das zu kopierende Segment (11) identisch sind, das vorbestimmte Unternetz das Unternetz ist, dem der das zu kopierende Segment speichernde Knoten angehört.

3. Verwaltungsverfahren nach einem der vorhergehenden Ansprüche, **dadurch gekennzeichnet, dass** der Knoten (18a, 18b) nach einer Datenspeicherkapazität des Knotens (18a, 18b) ausgewählt wird.

4. Verwaltungsverfahren nach einem der vorhergehenden Ansprüche, **dadurch gekennzeichnet, dass** der Knoten (18a, 18b) nach einer Speicherkapazität des Knotens (18a, 18b) ausgewählt wird.

5. Verwaltungsverfahren nach einem der vorhergehenden Ansprüche, **dadurch gekennzeichnet, dass** der ausgewählte Knoten (18a, 18b) einem Peer-Netzwerk angehört.

6. Ausrüstung in einem Kommunikationsnetz (40), umfassend:
- Mittel (15) zum Kopieren mindestens eines Teils eines zu kopierenden Segments (11) der Datenbank in ein kopiertes Segment (13);
- Mittel (16) zur Auswahl mindestens eines Knotens (18a, 18b), der dem Kommunikationsnetz (40) angehört und dazu bestimmt ist, das kopierte Segment (13) zu empfangen;
**dadurch gekennzeichnet, dass**, wobei das zu kopierende Segment auf einem Knoten eines Unternetzes des Kommunikationsnetzes speichert ist, die Auswahlmittel (16) geeignet sind, den Knoten (18a, 18b) nach einer Kapazitätsinformation, die ihm unter den Knoten eines vorbestimmten Unternetzes eigen ist, auszuwählen.

7. Kommunikationsnetz, das eine Datenbank einschließt, die einer Vielzahl von Segmenten gebildet ist, die auf einer Vielzahl von einem Kommunikationsnetz (40) angehörenden Knoten gespeichert sind, **dadurch gekennzeichnet, dass** die Knoten Ausrüstungen nach Anspruch 6 umfassen.

8. Kommunikationssystem nach dem vorhergehenden Anspruch, **dadurch gekennzeichnet, dass** Knoten, die identische Segmente (11, 13) der Datenbank speichern, untereinander verbunden sind, um Unternetze (41, 42, 43) zu bilden.

9. Kommunikationssystem nach einem der Ansprüche 7 bis 8, **dadurch gekennzeichnet, dass** Anschlüsse (51, 52, 53) die Unternetze (41, 42, 43) miteinander verbinden.

10. Computerprogramm, umfassend Codeabschnitte für die Ausführung der Schritte des Verfahrens nach einem der Ansprüche 1 bis 5, wenn das Programm auf dem Computer ausgeführt wird.

11. Bereitstellung eines Computerprogramms zum Fernladen nach dem vorhergehenden Anspruch.

## Claims

1. Method for managing a database (10) in a communication network (40) comprising the following steps:
- at least some of a segment to be copied (11) from the database is copied (51) to a copied segment (13);
- at least one node (18a, 18b) which is part of the communication network (40) and intended to receive the copied segment (13) is selected (52);
- **characterized in that**, said segment to be copied being stored on a node of a subnetwork of said communication network, the node (18a, 18b) is selected on the basis of a capacity information item which is characteristic of it from among the nodes of a predetermined subnetwork.

2. Management method according to the preceding claim, **characterized in that**, when the copied segment (13) and the segment to be copied (11) are identical, the predetermined subnetwork is the subnetwork that the node storing the segment to be copied is part of.

3. Management method according to one of the preceding claims, **characterized in that** the node (18a, 18b) is selected on the basis of a data storage capacity for said node (18a, 18b).

4. Management method according to one of the preceding claims, **characterized in that** the node (18a, 18b) is selected on the basis of a memory capacity for said node (18a, 18b).

5. Management method according to one of the preceding claims, **characterized in that** the selected node (18a, 18b) is part of a pair network.

6. Piece of equipment in a communication network (40) comprising:
- means for copying (15) at least some of a segment to be copied (11) from the database to a copied segment (13) ;
- means for selecting (16) at least one node (18a, 18b) which is part of the communication network (40) and intended to receive the copied segment (13);
**characterized in that**, said segment to be copied being stored on a node of a subnetwork of said communication network, the selection means (16) are capable of selecting the node (18a, 18b) on the basis of a capacity information item which is characteristic of it, from among the nodes of a predetermined subnetwork.

7. Communication system including a database which is made up of a plurality of segments stored on a plurality of nodes which are part of a communication network (40), **characterized in that** said nodes comprise pieces of equipment in accordance with Claim 6.

8. Communication system according to the preceding claim, **characterized in that** nodes storing identical segments (11, 13) from the database are connected to one another to form subnetworks (41, 42, 43).

9. Communication system according to one of Claims 7 to 8, **characterized in that** connections (51, 52, 53) link the subnetworks (41, 42, 43) to one another.

10. Computer program comprising portions of code for executing the steps of the method according to one of Claims 1 to 5 when a program is executed on said computer.

11. Supply of a computer program according to the preceding claim with a view to downloading it.
